# EUROPÄISCHE PATENTSCHRIFT

(11) **EP 1 208 355 B1**
(45) Veröffentlichungstag und Bekanntmachung des Hinweises auf die Patenterteilung: **30.03.2011**
(21) Anmeldenummer: 00969221.1
(22) Anmeldetag: 01.09.2000
(51) Int. Cl.: G01C 21/36, H04L 29/06

(54) **VERFAHREN UND ANORDNUNG ZUR DARSTELLUNG ORTSABHÄNGIGER LESEZEICHEN AUF EINEM RECHNER**
METHOD AND SYSTEM FOR DISPLAYING SITE-SPECIFIC BOOKMARKS ON A COMPUTER
PROCEDE ET SYSTEME PERMETTANT DE REPRESENTER DES SIGNETS EN FONCTION DU LIEU SUR UN ORDINATEUR

(30) Priorität: 03.09.1999 DE 19942173
(43) Veröffentlichungstag der Anmeldung: 29.05.2002
(73) Patentinhaber: SIEMENS AKTIENGESELLSCHAFT, 80333 München (DE)
(72) Erfinder: SCHWEITZER, Jean, 66121 Saarbrücken (DE); MINENKO, Vladimir, 66125 Saarbrücken (DE)
(86) Internationale Anmeldenummer: PCT/DE2000/003007
(87) Internationale Veröffentlichungsnummer: WO 2001/018490

(56) Entgegenhaltungen:
- WO-A-97/07467
- WO-A-98/59506
- US-A- 5 930 472

## Beschreibung

Die Erfindung betrifft ein Verfahren und eine Anordnung zur Darstellung ortsabhängiger Lesezeichen auf einem Rechner.

Betreibt man einen Rechner, zum Beispiel einen Personalcomputer, in einem Netzwerkverbund, zum Beispiel dem Internet, so gibt es eine Vielzahl von Adressen, auf die der Rechnen in den Netzwerkverbund zugreifen kann. Ein Benutzer bedient sich dabei gezielt dieser Adressen, um bestimmte Informationsbedürfnisse zu befriedigen. Zu einer besseren Übersicht werden die Adressen als Lesezeichen (Bookmarks) in Listen abgespeichert, wobei bevorzugt die Listen thematisch nach Präferenzen des Benutzers sortierbar sind. Bei Einsatz sogenannter Browser gibt es Verzeichnisse von Lesezeichen, die vom Benutzer geeignet gruppiert und sortiert werden können. Weiterhin gibt es auch Programme, die allein bei der Verwaltung der Vielzahl von Lesezeichen Unterstützung anbieten. Steht der Benutzer einen vollwertigen Rechner, z.B. einen Personalcomputer, zur Verfügung, so ist es für ihn leicht möglich, mit einem handelsüblichen Bildschirm die für ihn geeigneten Lesezeichen schnell zu finden. Er kann sich auf dem großen Bildschirm und den vielen Möglichkeiten der Vorsortierung zumeist einen guten Überblick über die Lesezeichen verschaffen und damit das in der jeweiligen Situation für ihn geeignete Lesezeichen schnell finden.

Grundsätzlich anders sieht dies bei einem portablen Rechner (z.B. bei einem Personal Digital Assistant = PDA) aus: Solch ein Gerät verfügt zumeist nur über eine kleine Anzeigeeinheit (Display), auf dem nicht die gleiche Menge an Information darstellbar ist, wie auf einem konventionellen Bildschirm. Insbesondere sind der portable Rechner zumeist mobil eingesetzt, wo insbesondere wenig Zeit für die Suche von Lesezeichen zur Verfügung steht.

Aus der internationalen Patentanmeldung WO 97/07467 ist ein Computersystem zur Identifizierung lokaler Ressourcen bekannt, bei dem von einem Client Computer Ortsinformationen an Server gesendet werden und dieser Server dann in Abhängigkeit dieser Informationen Karteninformationen zoomen oder verschieben und zugehörige Informationen zu bestimmten Punkten auf der Karte in Form von beispielsweise Hypertext entsprechend in der dargestellten Position angepasst wird.

Aus der internationalen Patentanmeldung WO 98/59506 sind Verbesserungen in oder bezüglich der Informationsverteilung bekannt, bei denen eine augenblickliche Position eines Anfragenden über das Telefonsystem, zum Beispiel über die Zellenzugehörigkeit zu einer Mobilfunkzelle, festgestellt wird und aus einer Datenbasis eine http-Adresse eines lokalen Informationsservers ermittelt wird, der dann für den Anfragenden lokale Informationen anbietet.

Die **Aufgabe** der Erfindung besteht darin, Lesezeichen auf einem Rechner darzustellen, wobei sich diese Darstellung insbesondere nach dem Aufenthaltsort des Rechners richtet.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Darstellung ortsabhängiger Lesezeichen auf einem Rechner angegeben, bei dem ein Aufenthaltsort des Rechners ermittelt wird. Zu diesem Aufenthaltsort werden korrespondierende Lesezeichen ermittelt und auf dem Rechner dargestellt.

Eine Weiterbildung besteht darin, daß anhand der Lesezeichen auf Daten in einem Netzwerk, insbesondere dem Internet, zugegriffen wird. Auch ist es eine Weiterbildung, daß der Rechner ein mobiler Rechner ist.

Eine Ausgestaltung besteht darin, daß der Aufenthaltsort des Rechners anhand eines Global Positioning Systems (GPS) ermittelt wird. Alternativ kann der Aufenthaltsort über ein Moblifunknetz, z.B. GSM, oder über ein Wave-LAN bestimmt werden.

Insbesondere ist es eine Ausgestaltung, daß ein zu dem Aufenthaltsort des Rechners korrespondierendes Lesezeichen dadurch bestimmt ist, daß die mit dem Lesezeichen verknüpfte Information eine vorgegebene Höchstentfernung von dem Aufenthaltsort des Rechners aufweist.

Auch ist es eine Ausgestaltung, daß Ressourcen des Rechners auf ein stationäres System ausgelagert werden. Dies eignet sich bevorzugt bei kleinen mobilen Geräten, deren Rechenleistung und Rechenkapazität stark eingeschränkt ist. Für komplexe Datenzugriffe und Suchabfragen kann das stationäre System genutzt werden, das die Ergebnisse der Speicherung bzw. Suchanfrage an das mobile System insbesondere über eine Funkschnittstelle übermittelt.

Hierbei sei angemerkt, daß zur Kommunikation des (mobilen) Rechners mit dem Netzwerk insbesondere eine Funkschnittstelle, z.B. via DECT oder GSM, eingesetzt werden können.

Eine andere Ausgestaltung besteht darin, daß Lesezeichen mit einer Ortsinformation abgespeichert werden. Dieses Abspeichern kann sowohl in dem (mobilen) Rechner selbst oder in dem Netzwerkverbund geschehen. Bei Abspeicherung in dem Netzwerkverbund nutzt der (mobile) Rechner einen Speicherplatz, den er vorzugsweise über die Luftschnittstelle abfragt bzw. Filterfunktionen über die Luftschnittstelle auslöst und das Ergebnis, das wiederum von dem Netzwerk zu dem Rechner übertragen wird, anzeigt.

Hierbei sei darauf hingewiesen, daß das Netzwerk bevorzugt aus einem Rechnerverbund besteht, deren mehrere Rechner untereinander Daten austauschen. Insbesondere kann in dem Fall der Speicherung und des Zugriffs auf Daten in dem Netzwerkverbund stellvertretend von einem (Netzwerk-)Rechner gesprochen werden. Ein Beispiel für einen großen Netzwerkverbund (Netzwerk) ist das Internet.

Eine Weiterbildung ist es, daß zusätzlich Zeitinformation vorgesehen ist, anhand derer eine Filterung der Lesezeichen durchgeführt wird. Diese Zeitinformation kann insbesondere dazu geeignet sein, automatisch die letzten angesprungenen Adressaten zu speichern und bei Bedarf dem Benutzer anzubieten. In der Kombination Zeitinformation und Ortsinformation können dem Benutzer die letzten angesprungenen Adressen, abhängig vom jeweiligen Aufenthaltsort, angeboten werden. Dadurch ist ein schneller und sehr effizienter Zugriff auf Lesezeichen möglich, die abhängig vom jeweiligen Ort den Benutzer mit Informationen versorgen, die für ihn wesentlich sind.

Generell ist es ein Vorteil der ortsbezogenen Lesezeichen, daß der Benutzer auf dem (mobilen) Rechner nicht nach den entsprechenden Adressen suchen muß, sondern schnell die richtigen angeboten bekommt. Der damit verbundene Zugriff auf die Daten, die mit den Lesezeichen assoziiert sind, erhöht die Akzeptanz im Umgang mit dem Rechner gleichermaßen wie die Effizienz steigt.

Ein Beispiel ist eine Fahrplanabfrage, die sich sehr stark nach dem Aufenthaltsort des Benutzers richtet. Eine Fahrplanabfrage kann somit schnell und effizient zum Beispiel von einer Bushaltestelle aus erfolgen. Für diese Bushaltestelle können die Abfahrtszeiten bzw. Verbindungen aufgezeigt werden und somit den Benutzer schnell und problemlos über die Ankunftszeit des nächsten Busses und die weitere Fahrstrecke informieren.

Auch sei angemerkt, daß die Ortsinformation in mehr oder minder große Zellen unterteilt sein kann. So ist es in einem GSM-Funknetz zum Beispiel möglich, auf kilometergenau Ortsinformation zu beziehen bzw. bereitzustellen. Mit einem Global Positioning System ist es möglich, auf mehrere 10m genau Ortsinformation abzufragen und bereitzustellen. Die Genauigkeit hängt vom jeweiligen Anwendungsgebiet und vom eingesetzten Funknetz ab.

Die mit der Zeitinformation versehenen Lesezeichen können automatisch oder manuell abgespeichert werden. Das automatische Abspeichern funktioniert mit der Auswahl der interessierenden Adresse, d.h. die angesprungene Andresse wird mit einem Zeit-und einem Ortstempel versehen abgespeichert. Entsprechend kann auch explizit eine Adresse abgespeichert werden.

Eine Ausgestaltung besteht darin, daß ein Lesezeichen mit einer Funktionalität verknüpft ist, z.B. "Busfahrplan". Ein zu dieser Lesezeichen gehörender Inhalt wird dynamisch bestimmt, abhängig von dem Aufenthaltsort und ggf. der aktuellen Zeit. Eine Möglichkeit im Beispiel "Busfahrplan" wäre der zur nächstgelegenen Haltestelle gehörende Fahrplan mit den nächsten Abfahrtzeiten bzw. Ankunftszeiten.

Ferner wird zur Lösung der Aufgabe eine Anordnung zur Darstellung ortsabhängiger Lesezeichen angegeben, bei der eine Prozessoreinheit vorgesehen ist, die derart eingerichtet ist, daß ein Aufenthaltsort des Rechners ermittelbar ist. Zu dem Aufenthaltsort sind korrespondierende Lesezeichen ermittelbar und darstellbar.

Diese Anordnung ist insbesondere geeignet zur Durchführung des erfindungsgemäßen Verfahrens oder einer seiner vorstehend erläuterten Weiterbildungen.

Ausführungsbeispiele der Erfindung werden nachfolgend anhand der Zeichnung dargestellt und erläutert.

Es zeigen
- Fig.1: eine Skizze mit einem Szenario zur mobilen Wahrneh- mung ortsabhängiger Dienste;
- Fig.2: eine Skizze mit einem Szenario zur Darstellung orts- abhängiger Lesezeichen auf einem Rechner, wobei die Ermittlung der Ortsinformation auf der Seite des Rechners geschieht;
- Fig.3: eine Skizze mit einem Szenario zur Darstellung orts- abhängiger Lesezeichen auf einem Rechner, wobei die Ermittlung der Ortsinformation auf der Seite des Netzwerks geschieht;
- Fig.4: eine Skizze, die eine Erweiterungsmöglichkeit der obigen Szenarien um eine Zeitinformation darstellt;
- Fig.5: eine Skizze, die ein Szenario darstellt, in dem we-
- -: sentliche Funktionen des Rechners in das Netzwerk ausgelagert werden;
- Fig.6: eine Skizze, die zwei unterschiedliche Verfahren zum Anlegen von Lesezeichen darstellt;
- Fig.7: eine Prozessoreinheit (Rechner).

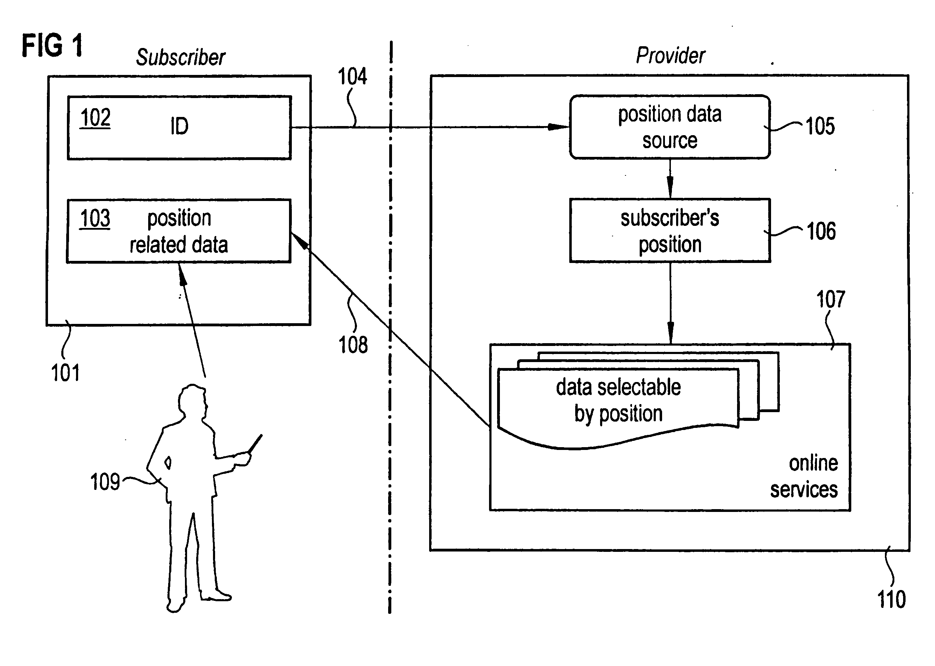

**Fig.1** zeigt eine Skizze mit einem Szenario zur mobilen Wahrnehmung ortsabhängiger Dienste. Ein mobiler Rechner 101, z.B. ein Personal Digital Assistant (PDA), wird von einem Benutzer 109 in einem Mobilfunknetz, angedeutet durch die Funkschnittstellen 104 und 108, betrieben. Dabei greift der mobile Rechner 101 auf ein Netzwerk, insbesondere einen Netzwerkverbund 110, zum Beispiel das Internet, zu. Bei dem Szenario "Internet als Netzwerkverbund, ist es üblich, daß ein Teilnehmer, hier der mobile Rechner 101, auf einen Diensteanbieter (Provider) stellvertretend für den Netzwerkverbund 110 zugreift. Der Diensteanbieter 110 beantwortet dabei insbesondere die Anfrage 104 des mobilen Rechners 101 und übermittelt eine entsprechende Antwort 108 an den mobilen Rechner 101 zurück.

In Fig.1 wird der Aufenthaltsort des Rechners 101 ermittelt (in Block 105, 106) und von diesem Aufenthaltsort abhängig bestimmte Dienste 107 angeboten.

Von dem Aufenthaltsort des Rechners 101 besonderes abhängige Informationen können sein: Reiseauskunft, Notdienste (Apotheken, Ärzte), Sehenswürdigkeiten, Mietwagen, Unterhaltung (Kino, Theater), Konsumwünsche (Kaufhäuser, Einkaufsmöglichkeiten).

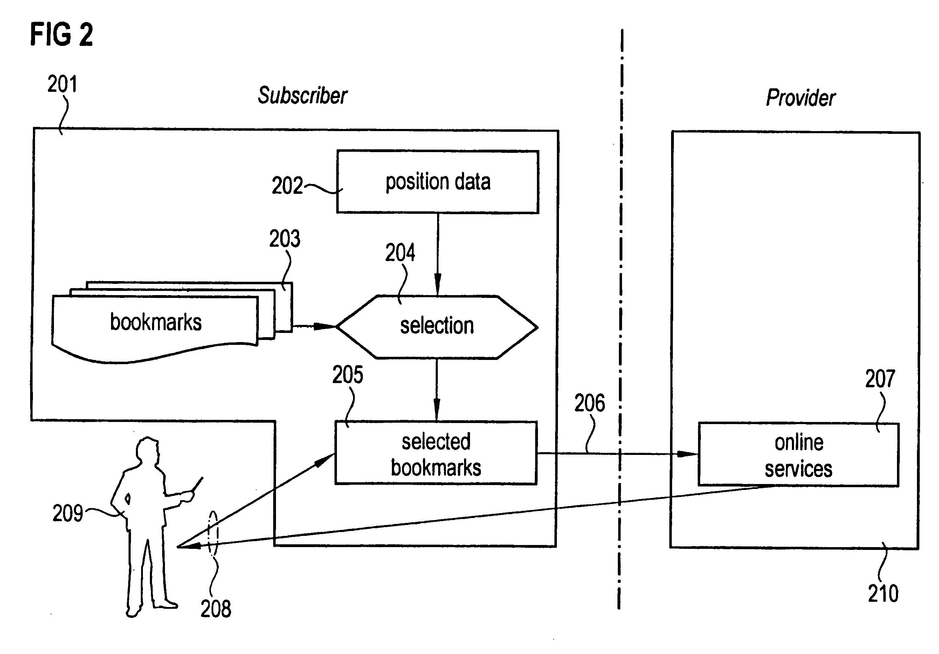

**Fig.2** zeigt eine Skizze mit einem Szenario zur Darstellung ortsabhängiger Lesezeichen auf einem Rechner, wobei die Ermittlung der Ortsinformation auf Seite des Rechners geschieht. Der Rechner 201, insbesondere ausgeführt als ein mobiler Rechner, ermittelt seinen Aufenthaltsort 202 (Ortsinformation) anhand von Daten eines Global Positioning Systems (GPS). Aus der Vielzahl lokal gespeicherter Lesezeichen 203 wird anhand seines Aufenthaltsorts 202 eine Auswahl 204 getroffen und damit die für den Aufenthaltsort des mobilen Rechners 201 relevanten Lesezeichen 205 dargestellt. Bevorzugt werden diejenigen Lesezeichen angeboten, die eine Entfernung vom Aufenthaltsort 202 aufweisen, die unterhalb eines vorgegebenen Schwellwerts liegt. Zusätzlich können Lesezeichen angeboten werden, die von dem Aufenthaltsort unabhängig sind (z.B. Lesezeichen zu Weltnachrichten).

Der Benutzer 209 kann eines dieser relevanten Lesezeichen 205 auswählen. Über eine Kommunikationsschnittstelle, hier einem GSM-Kanal 206, wird die Adresse zu einem Diensteanbieter 210 übermittelt und dort eine Anfrage 207 gestartet. Diese Anfrage 207 führt zu einem Ergebnis, das wiederum über den GSM-Kanal 208 zu dem Benutzer 209, insbesondere auf den mobilen Rechner 201 übertragen wird.

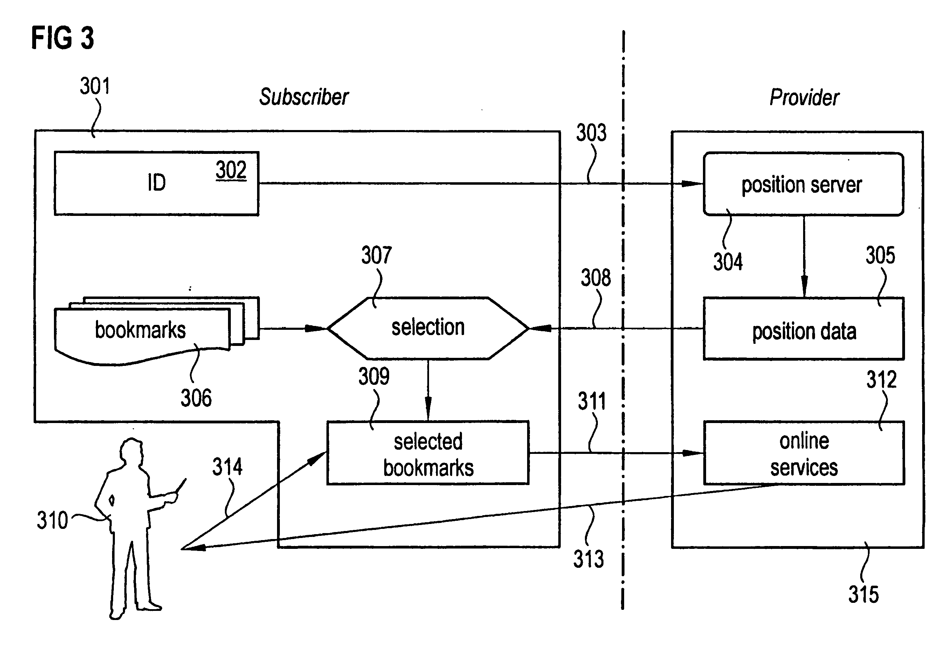

**Fig.3** zeigt eine Skizze mit einem Szenario zur Darstellung ortsabhängiger Lesezeichen auf einem Rechner, wobei die Ermittlung der Ortsinformation auf der Seite des Netzwerks geschieht. Wiederum ist ein mobiler Rechner 301 vorgesehen, der sich anhand einer für ihn eindeutigen Kennung 302 bei einem Diensteanbieter 315 bekannt macht. Auf Seite des Diensteanbieters 315 erfolgt eine Anfrage und eine Ermittlung der Position des mobilen Rechners 301 (siehe Blöcke 304 und 305). Dazu eignet sich das GSM-Netz, in dem die Position eines Teilnehmers ermittelbar ist. Die Vollduplex-Funkschnittstelle ist in Fig.3 durch die Kommunikationspfeile 303, 308 und 311 gekennzeichnet. Die auf der Seite des Diensteanbieters 315 ermittelten Positionsdaten 305 werden zu dem mobilen Rechner 301 übermittelt. Dort erfolgt aus einer lokal auf dem mobilen Rechner 301 gespeicherten Vielzahl von Lesezeichen 306 eine Auswahl 307 anhand der Ortsinformation 305. Daraus folgt eine Auswahl ortsrelevanter Lesezeichen 309, anhand derer der Benutzer 310 eine bestimmte Information abrufen kann (angedeutet durch den Pfeil 314). Diese Anfrage 314 wird zu dem Diensteanbieter 315 übertragen (Übertragungspfeil 311) und dort bearbeitet (siehe Block 312). Das Ergebnis 313 der Anfrage 314 bzw. 311 wird zu dem mobilen Rechner 301 zurückübertragen und dem Benutzer 310 dargestellt.

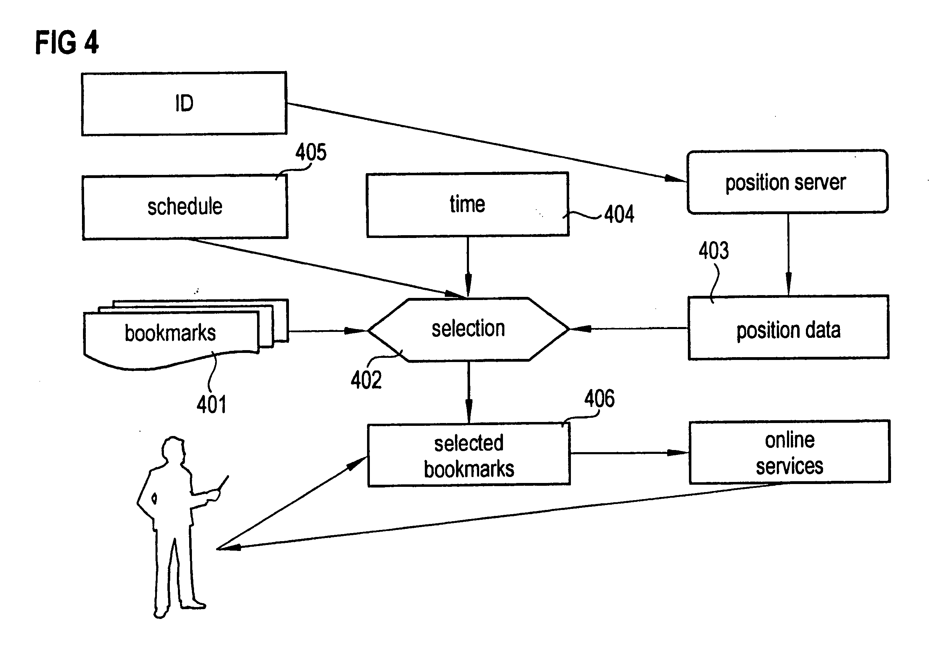

**Fig.4** zeigt eine Skizze, die eine Erweiterung der obigen Szenarien um eine Zeitinformation darstellt. Aufbauend auf Fig.2 oder Fig.3 wird in Fig.4 aus einer Vielzahl von Lesezeichen 401 eine Auswahl 402 anhand der Ortsinformation 403, einer Zeitinformation 404 und/oder einem Zeitplan 405 getroffen. Das Ergebnis der Auswahl sind auf den Filter der Auswahl passende Lesezeichen 406. Die Auswahl anhand der Ortsinformation 403 liefert zu dem Aufenthaltsorts der mobilen Rechners passende Lesezeichen. Zusätzlich werden diese Lesezeichen gefiltert hinsichtlich ihres Zeitstempels. Dies kann beispielsweise eine Filterfunktion derart sein: "Die gleichen Lesezeichen am gleichen Ort zur gleichen Zeit".

Zusätzlich kann mit dem Ort verbunden eine Zeitplanung erfolgen, so daß bei Aufenthalt an der vorgemerkten Stelle automatisch eine Terminerinnerung 405 stattfindet. Diese Terminerinnerung 405 bezieht sich insbesondere auf die Anfrage einer bestimmten Adresse in dem Netzwerkverbund. Beispiel: "Jeden Montag, bei Aufenthalt in dem Gebiet XY, Anfrage bei regionalem Zeitungsdienst starten."

Die Filter 403 bis 405 können in beliebiger Kombination (und/oder) miteinander kombiniert werden.

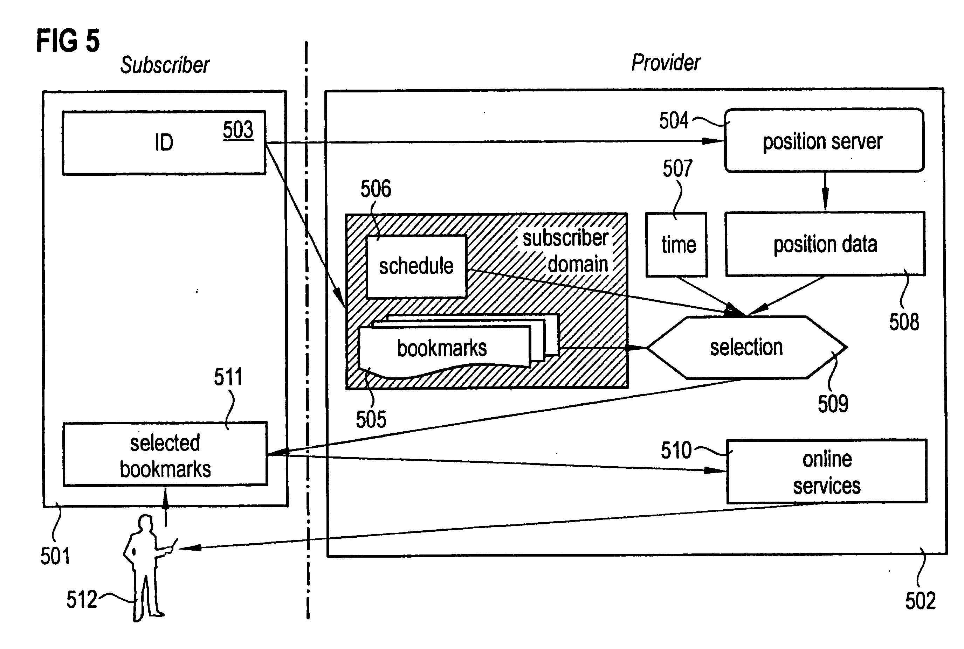

**Fig.5** zeigt eine Skizze, die ein Szenario darstellt, in dem wesentliche Funktionen des Rechners 501 in das Netzwerk 502 ausgelagert werden. Bei einem sehr leistungsschwachen mobilen Rechner 501 ist es vorteilhaft, die rechen- und speicherintensiven Operationen auf das ressourcenstarke Netzwerk 502 auszulagern.

Der mobile Rechner 501 übermittelt seine Kennung 503 an das Netzwerk 502. Dort wird zum einen die Position des mobilen Rechners 501 ermittelt (siehe Block 504), zum anderen werden die Lesezeichen 505, die auf der Seite des Netzwerks 502 gespeichert sind, in der oben beschriebenen Art gefiltert (Filter nach Zeitplan 506, Zeit 507 und Position 508). Die Auswahl 509 liefert einen Teil der Lesezeichen 505 an den mobilen Rechner 501 zurück. Der Benutzer 512 wählt ein Lesezeichen 511 aus und eine Anfrage in dem Netzwerk 502 wird gestartet (Block 510). Das Ergebnis wird an den mobilen Rechner 501 und somit zu dem Benutzer 512 übertragen.

Bei diesem Szenario ist es besonders vorteilhaft, daß der auf Gewicht und Benutzerfreundlichkeit optimierte mobile Rechner 501 Funktionen in das Netzwerk 502 auslagert. In dem Netzwerk 502 erhält der mobile Rechner 501 einen für ihn angelegten Bereich 513 (Domäne), der all seine Lesezeichen 505 und den für ihn kennzeichnenden Zeitplan 506 umfaßt. Vorzugsweise sind weitere Grundfunktionalitäten in dem mobilen Rechner 501 vorgesehen, die sich auf zusätzliches Abspeichern weiterer Lesezeichen in dem Netzwerk 502 bzw. Bearbeitung dieser Lesezeichen beziehen.

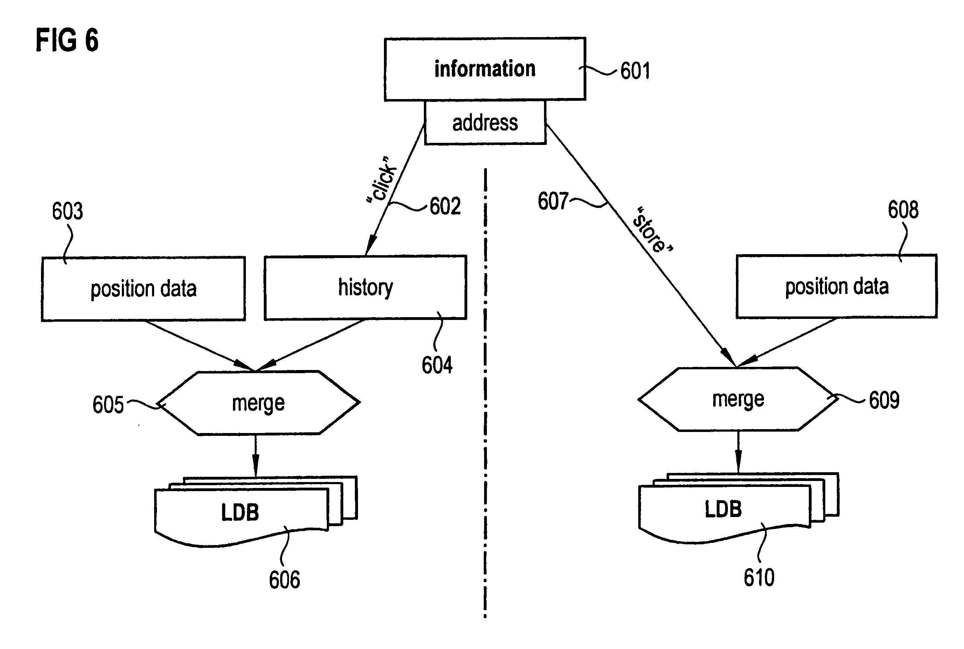

**Fig.6** zeigt eine Skizze, die zwei unterschiedliche Verfahren zum Anlegen von Lesezeichen darstellt.

Kann der Benutzer eine Information 601 auswählen, das heißt die mit ihr assoziierte Adresse anspringen, so erfolgt dies durch explizite Auswahl, bei herkömmlichen Netz-Browsern durch Anklicken einer hervorgehobenen Zieladresse. Diese gezielte Auswahl 602 verursacht insbesondere ein Mitprotokollieren des Zeitpunktes 604, wann die Information angefragt wurde und des Aufenthaltsorts 603, also von wo aus die Information angefragt wurde. Diese beiden Informationen Aufenthaltsort 603 und Zeitpunkt der Anfrage 604, werden zusammen 605 mit der Zieladresse der Information 601 abgespeichert. Dies entspricht einem automatischen Abspeichern von Lesezeichen.

Eine Alternative besteht in einem expliziten Abspeichern von Lesezeichen 607. In diesem Fall wird zu dem abzuspeichernden Lesezeichen die Ortsinformation 608, also der Aufenthaltsort des mobilen Rechners, abgefragt und sowohl die Adresse als auch der Aufenthaltsadresse zusammen 609 in den Lesezeichen 610 abgespeichert.

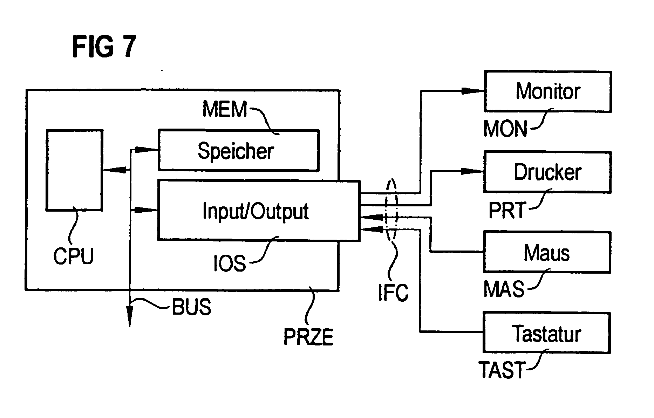

In **Fig.7** ist eine Prozessoreinheit PRZE dargestellt. Die Prozessoreinheit PRZE umfaßt einen Prozessor CPU, einen Speicher MEM und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

## Patentansprüche

1. Verfahren zur Darstellung ortsabhängiger Lesezeichen auf einem Rechner,
a)bei dem ein Aufenthaltsort des Rechners ermittelt wird;
b)bei dem zu dem Aufenthaltsort korrespondierende Lesezeichen ermittelt und dargestellt werden;
c)bei dem Lesezeichen mit einer Ortsinformation abgelegt werden.

2. Verfahren nach Anspruch 1,
bei dem anhand der Lesezeichen auf Daten in einem Netzwerk zugegriffen wird.

3. Verfahren nach Anspruch 2,
bei dem das Netzwerk das Internet ist.

4. Verfahren nach einem der vorhergehenden Ansprüche,
bei dem der Rechner ein mobiler Rechner ist.

5. Verfahren nach einem der vorhergehenden Ansprüche,
bei dem der Aufenthaltsort des Rechners anhand eines GPS-Sensors ermittelt wird.

6. Verfahren nach einem der vorhergehenden Ansprüche,
bei dem ein zu dem Aufenthaltsort korrespondierendes Lesezeichen bestimmt ist durch eine vorgegebene Entfernung der mit dem Lesezeichen verknüpften Information von dem Aufenthaltsort.

7. Verfahren nach einem der vorhergehenden Ansprüche,
bei dem Ressourcen des Rechners auf ein stationäres System ausgelagert werden.

8. Verfahren nach einem der vorhergehenden Ansprüche,
bei dem zusätzlich eine Zeitinformation vorgesehen ist, anhand derer eine Filterung der Lesezeichen durchgeführt wird.

9. Verfahren nach Anspruch 8,
bei dem die Lesezeichen automatisch oder manuell abgelegt werden.

10. Anordnung zur Darstellung ortsabhängiger Lesezeichen, bei der eine Prozessoreinheit vorgesehen ist, die derart eingerichtet ist, daß
a)ein Aufenthaltsort des Rechners ermittelbar ist;
b)bei dem zu dem Aufenthaltsort korrespondierende Lesezeichen ermittelbar und darstellbar sind;
c)bei dem Lesezeichen mit einer Ortsinformation abgelegt werden.

## Claims

1. Method for displaying location-dependent bookmarks on a computer,
a) wherein a location of the computer is determined;
b) wherein bookmarks corresponding to the location are ascertained and displayed;
c) wherein bookmarks are stored with location information.

2. Method according to claim 1,
wherein the bookmarks are used to access data in a network.

3. Method according to claim 2,
wherein the network is the internet.

4. Method according to one of the preceding claims,
wherein the computer is a mobile computer.

5. Method according to one of the preceding claims,
wherein the location of the computer is ascertained using a GPS sensor.

6. Method according to one of the preceding claims,
wherein a bookmark corresponding to the location is determined by a prescribed distance between the information linked to the bookmark and the location.

7. Method according to one of the preceding claims,
wherein resources of the computer are moved to a static system.

8. Method according to one of the preceding claims,
wherein time information is additionally provided, which is used to filter the bookmarks.

9. Method according to claim 8,
wherein the bookmarks are stored automatically or manually.

10. Arrangement for displaying location-dependent bookmarks, wherein a processor unit is provided which is set up such that
a) a location of the computer can be determined;
b) wherein bookmarks corresponding to the location can be determined and displayed;
c) wherein bookmarks are stored with location information.

## Revendications

1. Procédé pour représenter sur un ordinateur des signets fonctions du lieu, dans lequel :
a) une localisation de l'ordinateur est déterminée ;
b) des signets correspondant à la localisation sont déterminés et représentés ;
c) des signets sont déposés avec une information locale.

2. Procédé selon la revendication 1, dans lequel il est accédé à des données dans un réseau à l'aide des signets.

3. Procédé selon la revendication 2, dans lequel le réseau est l'internet.

4. Procédé selon l'une des revendications précédentes, dans lequel l'ordinateur est un ordinateur mobile.

5. Procédé selon l'une des revendications précédentes, dans lequel la localisation de l'ordinateur est déterminée à l'aide d'un capteur GPS.

6. Procédé selon l'une des revendications précédentes, dans lequel un signet correspondant à la localisation est déterminé par une distance prédéterminée entre l'information associée au signet et la localisation.

7. Procédé selon l'une des revendications précédentes, dans lequel des ressources de l'ordinateur sont délocalisées sur un système stationnaire.

8. Procédé selon l'une des revendications précédentes, dans lequel est additionnellement prévue une information de temps à l'aide de laquelle est effectué un filtrage des signets.

9. Procédé selon la revendication 8, dans lequel les signets sont déposés automatiquement ou manuellement.

10. Dispositif pour représenter des signets fonctions du lieu, dans lequel est prévue une unité de processeur qui est aménagée de manière telle qui :
a) une localisation de l'ordinateur peut être déterminée ;
b) des signets correspondant à la localisation peuvent être déterminés et représentés ;
c) des signets sont déposés avec une information locale.
